(19) **Europäisches Patentamt / European Patent Office / Office européen des brevets**

(11) **EP 2 541 080 A1**

(12) **EUROPEAN PATENT APPLICATION**
published in accordance with Art. 153(4) EPC

(43) Date of publication:
**02.01.2013 Bulletin 2013/01**

(51) Int Cl.:
*F16C 9/02* (2006.01)　　*F16C 3/14* (2006.01)
*F16C 9/04* (2006.01)　　*F16C 17/02* (2006.01)
*F16C 33/10* (2006.01)

(21) Application number: **10846603.8**

(22) Date of filing: **05.11.2010**

(86) International application number:
**PCT/JP2010/069669**

(87) International publication number:
**WO 2011/104940 (01.09.2011 Gazette 2011/35)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.02.2010 JP 2010043450**

(71) Applicant: **Taiho Kogyo Co., Ltd**
**Toyota-shi**
**Aichi 471-8502 (JP)**

(72) Inventor: **WATANABE Kenji**
**Toyota-shi**
**Aichi 471-8502 (JP)**

(74) Representative: **Cabinet Plasseraud**
**52, rue de la Victoire**
**75440 Paris Cedex 09 (FR)**

(54) **BEARING LUBRICATING DEVICE**

(57)　A partial groove 14 is formed in an inner circumferential surface of an upper side bearing member 11 of a main bearing 5 which pivotally supports a main shaft 3A of a crankshaft 3, and a space D between an end portion of the partial groove 14 and each of crush reliefs 11b formed at both ends in a circumferential direction of the upper side bearing member 11 is provided within a range of 2 mm ≤ D ≤ main shaft diameter/3.

Further, a depth gradually decreasing portion 14b having an arc-shaped section is formed at an end portion of the partial groove 14, and a radius r of the depth gradually decreasing portion 14b is provided within a range of 0 ≤ r ≤ main bearing inner circumferential surface radius x 0.5.

Further, in a connecting rod bearing 6, a lubricating oil discharge passage 23, which discharges a lubricating oil outside a connecting rod 4 when communicating with an internal passage 3C formed in the crankshaft 3, is provided.

An amount of the lubricating oil which is discharged from a sliding portion of the main bearing is suppressed, and damage to the main bearing and the connecting rod bearing due to a foreign substance in the lubricating oil can be prevented as much as possible.

Fig. 2

EP 2 541 080 A1

**Description**

Technical Field

The present invention relates to a bearing oil feed device, and more particularly to a bearing oil feed device which is favorable in a case of feeding oil to a crankshaft of an engine for an automobile, for example.

Background Art

Conventionally, an engine for an automobile, for example, includes a crankshaft including a plurality of main shafts and crank pins, a plurality of main bearings each configured by a semi-cylindrical upper side bearing member and lower side bearing member which pivotally and rotatably and supports the above described main shaft at a cylinder block, and a plurality of connecting rod bearings which pivotally and rotatably support the above described crankpins at connecting rods.

There are known bearing oil feed devices in each of which in order to lubricate the main shafts and the crankpins, a radial hole which communicates with a lubricating oil passage which is formed inside a cylinder block is formed in the upper side bearing member of the above described main bearing, a lubricating oil is supplied to a sliding portion of each of the main bearings and the main shaft, and the lubricating oil which is supplied to the sliding portion is supplied to a sliding portion of the above described crankpin and the connecting rod bearing via an internal passage formed in an inside of the crankshaft (Patent Literature 1, Patent Literature 2 and Patent Literature 3).

Further, as the bearing oil feed device as above, there is known the bearing oil feed device in which an oil groove is formed in an entire periphery of the upper side bearing member of the main bearing, the oil groove is opened to a joint portion of a half-split bearing and a space is formed in the joint portion, whereby a foreign substance in the oil groove is discharged from the main bearing with the lubricating oil to make it difficult for the above described foreign substance from entering the connecting rod bearing via the internal passage formed in the crankshaft (Figure 2 of Patent Literature 4).

Prior Art Documents

Patent Literature

Patent Literature 1: Japanese Patent Laid-Open No. 4-219521
Patent Literature 2: Japanese Patent Laid-Open No. 5-215125
Patent Literature 3: Japanese Patent Laid-Open No. 7-27127
Patent Literature 4: Japanese Patent Laid-Open No. 2005-076755

Summary of Invention

Problems to be Solved by the Invention

However, in recent years, low friction of a crankshaft has been required, and it is found out that the amount of the lubricating oil which is discharged from the sliding portion of a main shaft and a main bearing gives a larger influence on the friction than the amount of the lubricating oil which is discharged from the sliding portion of a crankpin and a connecting rod bearing.

In contrast with this, in the bearing oil feed device of Patent Literature 4, a groove is formed in the entire periphery of the upper side bearing member, and a space is formed in the joint portion, whereby a problem arises that the amount of the lubricating oil which is discharged from the sliding portion of the main shaft and the main bearing is large.

In the light of the problem like this, the present invention provides a bearing oil feed device which suppresses an amount of a lubricating oil which is discharged from a sliding portion of a main bearing, and can prevent damage to the main bearing and a connecting rod bearing due to a foreign substance which flow in the above described lubricating oil as much as possible.

Means for Solving the Problems

More specifically, a bearing oil feed device according to claim 1 is a bearing oil feed device including a crankshaft including a plurality of main shafts and crankpins, a plurality of main bearings which are each configured by a semi-cylindrical upper side bearing member and lower side bearing member, and each pivotally supports the main shaft rotatably at a cylinder block, and a plurality of connecting rod bearings which each pivotally supports the crankpin rotatably at a connecting rod,

in which a radial hole which communicates with a lubricating oil passage formed inside the cylinder block is formed in the upper side bearing member in the main bearing, and a lubricating oil which is supplied to a sliding portion of the main bearing and the main shaft via the radial hole is supplied to a sliding portion of the crankpin and the connecting rod bearing via an internal passage which is formed inside the crankshaft and is opened to the main shaft and the crankpin, wherein a partial groove which is formed in a circumferential direction of an inner circumferential surface of the upper side bearing member in the main bearing, to which the radial hole is opened, and which communicates with an opening of the internal passage of the main shaft is formed,

a space D between an end portion of the partial groove and each of crush reliefs formed at both ends in a circumferential direction of the upper side bearing member is provided within a range of

$$2 \text{ mm} \le D \le \text{main shaft diameter}/3 \text{ ... (expression 1),}$$

a depth gradually decreasing portion which is formed to be arc-shaped in section seen from an axial direction of the upper side bearing member is formed at the end portion of the partial groove, and a radius r of the depth gradually decreasing portion is provided within a range of

$$0 \le r \le \text{main bearing inner circumferential surface}$$
$$\text{radius} \times 0.5 \text{ ... (expression 2),}$$

and

a lubricating oil discharge passage which communicates with the internal passage formed in the crankshaft to discharge the lubricating oil is provided in the connecting rod bearing.

Further, a bearing oil feed device according to claim 2 is a bearing oil feed device including a crankshaft including a plurality of main shafts and crankpins, a plurality of main bearings which each pivotally supports the main shaft rotatably at a cylinder block, and are each configured by a semi-cylindrical upper side bearing member and lower side bearing member, and a plurality of connecting rod bearings which each pivotally supports the crankpin rotatably at a connecting rod,

in which a radial hole which communicates with a lubricating oil passage formed inside the cylinder block is formed in the upper side bearing member in the main bearing, and a lubricating oil which is supplied to a sliding portion of the main bearing and the main shaft via the radial hole is supplied to a sliding portion of the crankpin and the connecting rod bearing via an internal passage which is formed inside the crankshaft and is opened to the main shaft and the crankpin, wherein a partial groove which is formed in a circumferential direction of an inner circumferential surface of the upper side bearing member in the main bearing, to which the radial hole is opened, and which communicates with an opening of the internal passage of the main shaft is formed,

a space D between an end portion of the partial groove and each of crush reliefs formed at both ends in a circumferential direction of the upper side bearing member is provided within a range of

$$2 \text{ mm} \le D \le \text{main shaft diameter}/3 \text{ ... (expression 1),}$$

a depth gradually decreasing portion with a depth gradually decreasing is formed at the end portion of the partial groove, and an angle θ formed by the depth gradually decreasing portion and the inner circumferential surface of the upper side bearing member is provided within a range of

$$\theta \ge 25° \text{ ... (expression 3),}$$

and

a lubricating oil discharge passage which communicates with the internal passage formed in the crankshaft to discharge the lubricating oil is provided in the connecting rod bearing.

Advantageous Effects of Invention

According to the inventions of the above described claim 1 and claim 2, the depth gradually decreasing portion of the inner groove formed in the upper side bearing member of the above described main bearing is formed in conformity with the above described conditions, whereby the lubricating oil is stopped by the above described depth gradually decreasing portion, and the discharge amount of the lubricating oil from the sliding portion of the main shaft and the main bearing can be suppressed.

Furthermore, the foreign substance in the lubricating oil can be also kept to stay in the above described depth gradually decreasing portion, and when the internal passage formed in the crankshaft communicates with the depth gradually decreasing portion, the foreign substance can be caused to flow into the internal passage together with the above described lubricating oil.

The foreign substance is discharged from the lubricating oil discharge passage formed in the above described connecting rod bearing, and therefore, damage to the above described main bearing and the connecting rod bearing due to the foreign substance is prevented.

Brief Description of Drawings

[Figure 1] Figure 1 is a sectional view of a main part showing a first embodiment of the present invention.
[Figure 2] Figure 2 is a partial enlarged view of a main bearing.
[Figure 3] Figure 3 is a partial enlarged view of a connecting rod bearing.
[Figure 4] Figure 4 is a graph showing an experimental result.
[Figure 5] Figure 5 is a graph showing an experimental result.
[Figure 6] Figure 6 is a partial enlarged view of a main bearing in a second embodiment.
[Figure 7] Figure 7 is a partial enlarged view of a connecting rod bearing in the second embodiment.
[Figure 8] Figure 8 is a graph showing an experimental result.

Mode for Carrying out the Invention

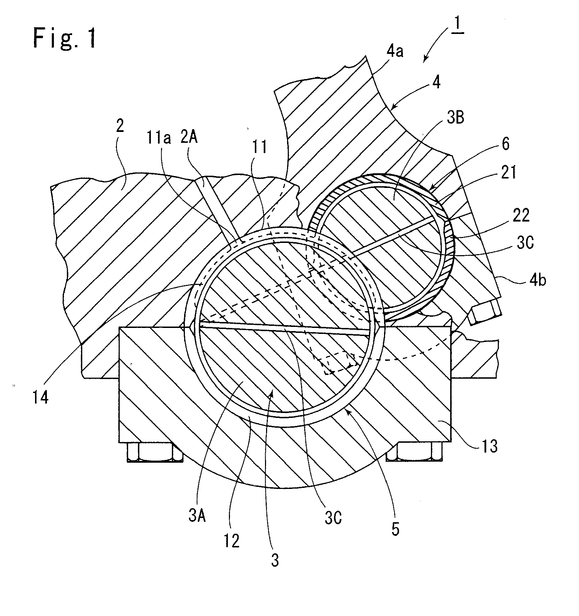

Describing the present invention with respect to illustrated embodiments hereinafter, Figure 1 shows a sectional view of a main part of an engine 1 for an automobile as a bearing oil feed device, and the engine 1 includes a cylinder block 2, a crankshaft 3 pivotally supported rotatably at the cylinder block 2, and a connecting rod 4 pivotally supported rotatably at the crankshaft 3.

The above described crankshaft 3 is configured by a main shaft 3A pivotally supported at the cylinder block 2 via a main bearing 5, a crankpin 3B pivotally supported at the connecting rod 4 via a connecting rod bearing 6, and a connecting member not illustrated which connects the main shaft 3A and the crankpin 3B.

An internal passage 3C which allows the lubricating oil to flow therethrough is formed inside the crankshaft 3, and the internal passage 3C opens at a position opposed to a diameter direction of an outer circumferential surface in the main shaft 3A, and is formed in an oblique direction from one opening in the main shaft 3A to open to an outer circumferential surface of the crankpin 3B.

The above described main bearing 5 is configured to be cylindrical by butting a semi-cylindrical upper side bearing member 11 and a semi-cylindrical lower side bearing member 12 which are a pair of upper and lower members, and the main bearing 5 is fixed to the above described cylinder block 2 by a cap 13 an inner surface of which is formed into a semicircular shape.

The main shaft 3A of the above described crankshaft 3 slides in contact with inner circumferential surfaces of the upper side bearing member 11 and the lower side bearing member 12, and the inner circumferential surface of the main bearing 5 and the outer circumferential surface of the main shaft 3A configure a sliding portion.

A lubricating oil passage 2A is formed inside the above described cylinder block 2, a radial hole 11a is formed in the upper side bearing member 11 of the main bearing 5 to correspond to a position of a lower end portion of the lubricating oil passage 2A.

By the radial hole 11a, the lubricating oil which flows via the above described lubricating oil passage 2A is supplied to the sliding portion of the main bearing 5 and the main shaft 3A via the radial hole 11a, and lubricates the sliding portion.

The main bearing 5 of the present embodiment is provided with a partial groove 14 which is formed in a circumferential direction in the inner circumferential surface of the above described upper side bearing member 11, and the partial groove 14 communicates with the opening of the internal passage 3C of the main shaft 3A which rotates.

Meanwhile, in the above described lower side bearing member 12, the above described radial hole 11a and the partial groove 14 are not formed, and a load which is exerted from the crankshaft 3 is received by the entire inner circumferential surface of the lower side bearing member 12.

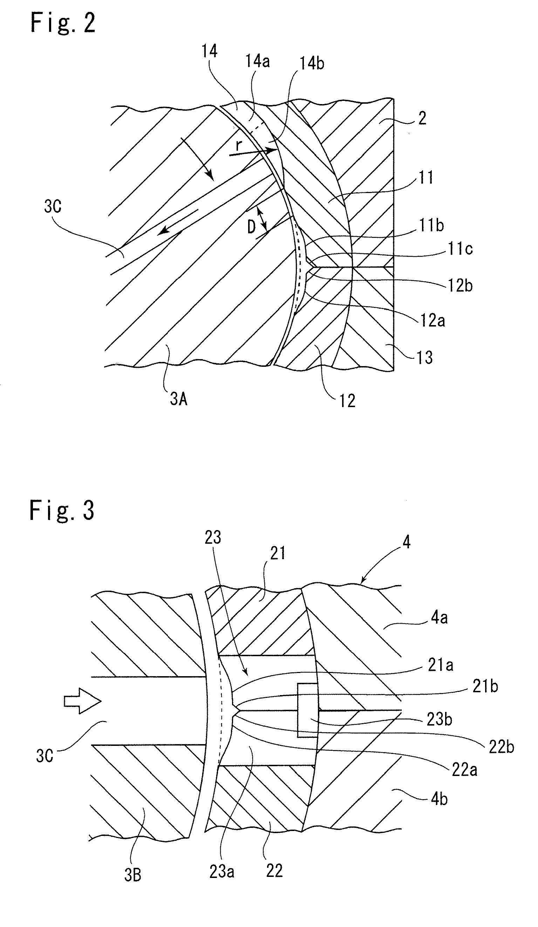

Describing the above described partial groove 14 in more detail, Figure 2 shows an enlarged view of a border portion of the upper side bearing member 11 and the lower side bearing member 12 in the above described main bearing 5, and in a joint portion of both the bearing members 11 and 12, crush reliefs 11b and 12a and chamfers 11c and 12b are formed respectively.

The above described partial groove 14 is configured by a groove portion 14a which is formed with a predetermined depth, and a depth gradually decreasing portion 14b which is adjacent to the groove portion 14a and has the depth gradually decreasing up to a position the inner circumferential surface, and the above described radial hole 11a opens to the above described groove portion 14a.

An end portion of the above described partial groove 14, that is, a position at which a depth of the depth gradually decreasing portion 14b becomes zero is set within the following range when a distance between the end portion of the partial groove 14 and the above described crush relief 11b is set as D.

$$2 \text{ mm} \leq D \leq \text{main shaft diameter}/3 \ \dots \ \text{(expression 1)}$$

Further, the above described depth gradually decreasing portion 14b is machined to be in a circular arc shape of a radius r when seen from the axial direction of the main bearing 5, and the radius r of the depth gradually decreasing portion 14b is set within the following range.

$$0 \leq r \leq \text{main bearing inner circumferential surface radius} \times 0.5 \ \dots \ \text{(expression 2)}$$

Next, the connecting rod bearing 6 is configured to be cylindrical by butting a pair of upper and lower half-split bearings 21 and 22, and is held by semicircular recessed portions formed in a connecting rod main body 4a and a connecting rod cap 4b.

The crankpin 3B of the above described crankshaft 3 is in sliding contact with inner circumferential surfaces of the two half-split bearings 21 and 22, and the inner circumferential surface of the connecting rod bearing 6 and the outer circumferential surface of the crankpin 3B configure a sliding portion.

Figure 3 shows a partial enlarged view of the connecting rod bearing 6, in a joint portion of the half-split bearings 21 and 22, crush reliefs 21a and 22a and chamfers 21b and 22b are formed respectively, and the joint portion is provided with a lubricating oil discharge passage 23 which communicates with the internal passage 3c formed in the crankshaft 3 to discharge the lubricating oil.

The above described lubricating oil discharge passage 23 is configured by a through-hole 23a which is formed in a position of the above described joint portion and penetrates in a radial direction, and a foreign substance discharge groove 23b which is formed in outer circumferential surfaces of the half-split bearings 21 and 22 and communicates with the above described through-hole 23a.

The above described through-hole 23a is provided by being bored in a central portion in the axial direction in the connecting rod bearing 6, and is formed in a position superimposed on a movement trajectory of the opening of the internal passage 3C by rotation of the crankpin 3B.

Further, an inside diameter of the through-hole 23a is set to be a dimension which allows the maximum foreign substance assumed to be included in the lubricating oil to pass, and is set to be larger than an inside diameter of the internal passage 3C which opens to the above described crankpin 3B.

The above described foreign substance discharge groove 23b is configured by two notches formed respectively at edge portions of the outer circumferential surfaces of the above described two half-split bearings 21 and 22, and are respectively formed to penetrate in the axial direction of the connecting rod bearing 6.

Further, a width of the foreign substance discharge groove 23b is set to be a dimension smaller than the inside diameter of the above described through-hole 23a, and a depth of the foreign substance discharge groove 23b is set at such a dimension as to allow a foreign substance of the maximum size which is assumed in advance to pass.

According to the configuration as above, a space is formed between the above described foreign substance discharge groove 23b and the inner circumferential surface of the connecting rod 4, and the lubricating oil which passes through the above described through-hole 23a is discharged from end surfaces at both sides of the connecting rod 4 via the space.

An operation of the engine 1 having the above described configuration will be described, and in particular, the moving path of the lubricating oil which passes through the inside of the engine 1 will be described.

When the engine 1 is operated, the lubricating oil passes through the lubricating oil passage 2A of the cylinder block 2, and thereafter, is supplied into the partial groove 14 of the main bearing 5 via the radial hole 11a formed in the upper side bearing member 11 of the main bearing 5.

Of the lubricating oil, a part of the lubricating oil lubricates the sliding portion of the main bearing 5 and the main shaft 3A from the partial groove 14, whereas the other lubricant oil moves along the circumferential direction of the upper side bearing member 11 inside the above described partial groove 14 with rotation of the main shaft 3A, and thereafter, moves to the depth gradually decreasing portion 14b of the partial groove 14.

Here, the above described depth gradually decreasing portion 14b is formed to be abruptly shallow based on the above described (expression 2), and therefore, the lubricating oil in the partial groove 14 is stopped by the depth gradually decreasing portion 14b.

Further, the depth gradually decreasing portion 14b is formed in a position separated from the crush relief 11b based on the above described (expression 1), and therefore, the blocked lubricating oil is prevented from moving to the crush relief 11b via a gap between the inner circumferential surface of the upper side bearing member 11 and the outer circumferential surface of the main shaft 3A.

When the opening of the internal passage 3C formed in the above described main shaft 3A approaches the depth gradually decreasing portion 14b of the partial groove 14 in this state, the lubricating oil which is stopped by the depth gradually decreasing portion 14b flows into the internal passage 3C at once, and most of the lubricating oil supplied to the main bearing 5 flows into the internal passage 3C.

As above, the lubricating oil is stopped by the above described depth gradually decreasing portion 14b, whereby the amount of the lubricating oil which is discharged outside from the sliding portion of the main shaft 3A and the main bearing 5 can be suppressed, and the sliding portion of the main shaft 3A and the main bearing 5 is lubricated by a suitable amount of the lubricating oil.

Meanwhile, when a foreign substance is contained inside the lubricating oil which is supplied from the above described cylinder block 2, the foreign substance flows into the partial groove 14 which is formed in the upper side bearing member 11 via the above described lubricating oil passage 2A and the radial hole 11a with the lubricating oil.

The foreign substance in the partial groove 14 moves to the depth gradually decreasing portion 14b of the partial groove 14 with the lubricating oil, but the foreign substance is inhibited from moving outside the partial groove 14 by the depth gradually decreasing portion 14b similarly to the lubricating oil.

Thereafter, the foreign substance staying in the depth gradually decreasing portion 14b flows into the internal passage 3C simultaneously with the above described lubricating oil flowing into the internal passage 3C at once when the internal passage 3C which opens to the above described main shaft 3A passes the depth gradually decreasing portion 14b.

As above, the foreign substance in the lubricating oil which flows in the above described partial groove 14 flows into the internal passage 3C of the crankshaft 3 without entering between the main shaft 3A and the main bearing 5, owing to the depth gradually decreasing portion 14b, and therefore, damage of the sliding portion of the main shaft 3A and the main bearing 5 due to foreign substance is prevented.

Subsequently, the lubricating oil which flows into the internal passage 3C moves to the crankpin 3B side with the rotation of the crankshaft 3, and thereafter, is discharged to the sliding portion with the connecting rod bearing 6 from the opening which is formed in the outer periphery of the crankpin 3B.

Of the lubricating oil, a part of the lubricating oil lubricates the sliding portion of the crankpin 3B and the connecting rod bearing 6, and the other lubricating oil is discharged outside the connecting rod 4 from the lubricating oil discharge passage 23 formed in the above described connecting rod bearing 6.

Describing more specifically, when the opening of the internal passage 3C formed in the above described crankpin 3B reaches the joint portion of the two half-split bearings 21 and 22, the opening of the internal passage 3C communicates with the through-hole 23a of the above described lubricating oil discharge passage 23, and the lubricating oil in the internal passage 3C flows into the above described foreign substance discharge groove 23b via the through-hole 23a. The foreign substance discharge groove 23b is formed in the axial direction of the connecting rod bearing 6, and therefore, the lubricating oil is discharged outside the connecting rod 4 from the end surfaces at both sides of the connecting rod bearing 6 via the foreign substance discharge groove 23b.

At this time, the foreign substance contained in the lubricating oil in the above described internal passage 3C is also discharged outside the connecting rod 4 from the lubricating oil discharge passage 23, whereby damage to the crankpin 3B and the connecting rod bearing 6 due to the foreign substance is prevented, and the through-hole 23a and the foreign substance discharge groove 23b are formed to be larger than the foreign substance, whereby the foreign substance does not close the lubricating oil discharge passage 23.

As above, according to the engine 1 of the present embodiment, the partial groove 14 is formed in the upper side bearing member 11 of the main shaft 3A, and the depth gradually decreasing portion 14b of the partial groove 14 is formed under the conditions of the above described (expression 1) and (expression 2), whereby most of the lubricating oil which is supplied to the sliding portion of the main shaft 3A and the main bearing 5 can be caused to flow into the internal passage 3C which is formed in the crankshaft 3.

As a result, the amount of the lubricating oil which is discharged from the sliding portion of the main shaft 3A and the main bearing 5 can be suppressed, and the foreign substance contained in the lubricating oil can be discharged to the internal passage 3C, whereby damage to the main shaft 3A and the main bearing 5 can be prevented.

Furthermore, the foreign substance contained in the lubricating oil which is supplied to the above described internal passage 3C is discharged outside the connecting rod 4 together with the lubricating oil by the lubricating oil discharge passage 23 which is formed in the above described connecting rod bearing 6, and therefore, damage to the crankpin 3B and the connecting rod bearing 6 by the foreign substance can be also prevented.

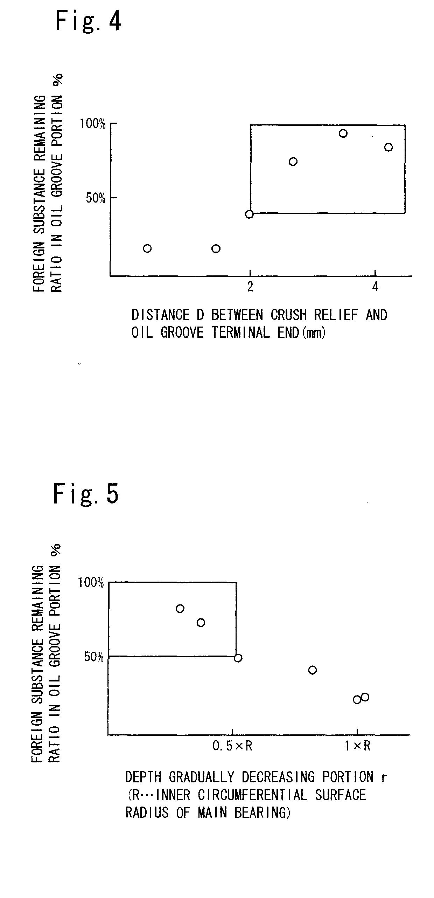

Figure 4 and Figure 5 show graphs showing experimental results of the engine 1 according to the above described embodiment.

In the experiment, the above described engine 1 was operated in a state in which the internal passage 3C of the crankshaft 3 having the above described configuration was closed, and a predetermined amount of foreign substance was mixed into the lubricating oil which was supplied from the lubricating oil passage 2A of the above described cylinder block 2, and how much foreign substance remained in the partial groove 14 formed in the upper side bearing member 11 in the above described main shaft 3A was measured.

Figure 4 is the experimental result about expression 1, and an axis of abscissa represents a distance D between the end portion of the partial groove 14 and the crush relief 11b, whereas an axis of ordinates represents a ratio of the foreign substance mixed via the lubricating oil passage 2A being recovered by the above described partial groove 14. In the experiment of Figure 4, an radius r of the depth gradually decreasing portion 14b in expression 2 is set as a radius of the inner circumferential surface of the main shaft 3A x 0.5.

As is understood from Figure 4, it can be understood that when the distance D is set as 2 mm or more, the foreign substance favorably remains in the partial groove 14, and it is predictable that if the internal passage 3C of the above described crankshaft 3 communicates therewith in this state, the foreign substance is favorably recovered into the internal passage 3C.

Figure 5 is an experimental result about expression 2, and the axis of abscissa represents a radius r of the depth gradually decreasing portion 14b, whereas the axis of ordinates represents a ratio of the foreign substance mixed via the lubricating oil passage 2A being recovered by the above described partial groove 14. In the experiment of Figure 5, the distance D between the end portion of the partial groove 14 and the crush relief 11b in expression 1 is set at 2 mm.

As is understood from Figure 5, it can be understood that when the radius r, the distance D is made smaller than the radius of the inner circumferential surface of the main shaft 3A x 0.5, the foreign substance favorably remains in the partial groove 14, and it is predictable that if the internal passage 3C of the above described crankshaft 3 communicates therewith in this state, the foreign substance is favorably recovered in the internal passage 3C.

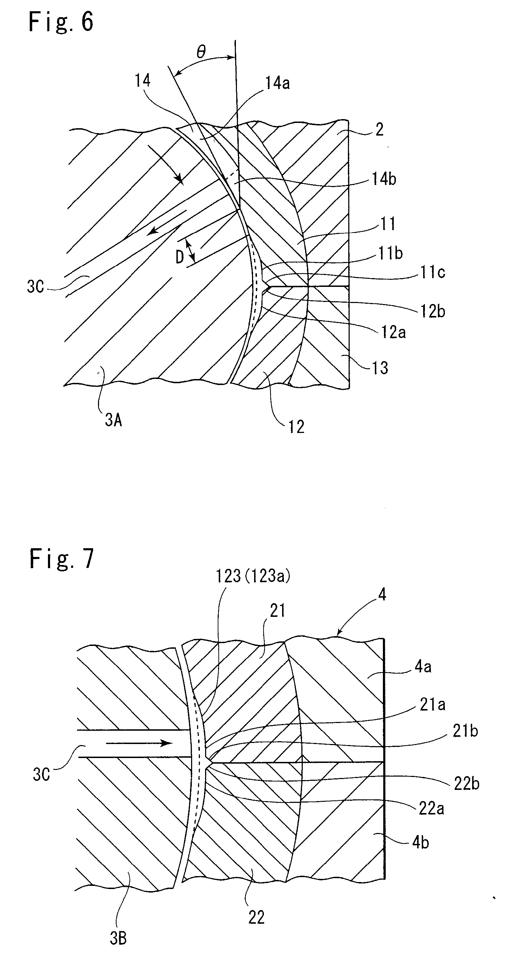

Figure 6 and Figure 7 show partial sections of the engine 1 of a second embodiment according to the present invention, Figure 6 shows an partial enlarged view of the main bearing 5 similarly to Figure 2 of the above described first embodiment, and Figure 7 shows a partial enlarged view of the connecting rod bearing 6 similarly to Figure 3 of the above described first embodiment.

The configuration of the parts other than the part which will be described as follows is the same as the first embodiment, and therefore, the detailed description thereof will be omitted.

As shown in Figure 6, the partial groove 14 is formed in the upper side bearing member 11 of the main shaft 3A in the second embodiment, and to the distance D between the end portion of the partial groove 14 and the crush relief 11b, the relation of (expression 1) in the above described first embodiment is applied.

In the present embodiment, in the depth gradually decreasing portion 14b which is formed at the end portion of the above described partial groove 14, an angle $\theta$ which is formed by the depth gradually decreasing portion 14b and the inner circumferential surface of the upper side bearing member 11 is set within the following range.

$$\theta \geq 25° \quad ... \quad (\text{expression 3})$$

Next, as shown in Figure 7, a lubricating oil discharge passage 123 is formed in the inner circumferential surface of the connecting rod bearing 6, is more specifically configured by crush reliefs 21a and 22a which are formed in a connection portion of the above described half-split bearings 21 and 22, and chamfers 21b and 22b which are formed adjacently to the crush reliefs 21a and 22a, and a foreign substance discharge groove 123a is formed by the crush reliefs 21a and 22a and the chamfers 21b and 22b.

A depth from the outer circumferential surface of the above described crankpin 3B to bottom portions of the chamfers 21b and 22b in the above described foreign substance discharge groove 123a is set at a dimension which enables a maximum foreign substance assumed to be mixed in the lubricating oil to pass.

By adopting the configuration as above, a space by the above described foreign matter discharge groove 123a is formed between the outer circumferential surface of the above described crankpin 3B and the inner circumferential surface of the connecting rod bearing 6, and the space is penetrated in the axial direction of the connecting rod bearing 6 to communicate with an outside of the connecting rod 4.

In the engine 1 according to the above described second embodiment, when the engine 1 is operated, the lubricating oil flows through the lubricating oil passage 2A of the cylinder block 2, after which, the lubricating oil is discharged to the sliding portion of the main bearing 5 and the main shaft 3A via the radial hole 11a formed in the upper side bearing member 11 of the main bearing 5, and the lubricating oil is supplied into the partial groove 14 which is formed in the upper side bearing member 11.

Thereafter, when the lubricating oil in the partial groove 14 approaches the depth gradually decreasing portion 14b of the partial groove 14, the lubricating oil in the partial groove 14 is stopped by the depth gradually decreasing portion 14b because the depth gradually decreasing portion 14b is formed in such a manner that the depth of the partial groove 14 abruptly becomes small based on the above described (expression 3).

Further, the depth gradually decreasing portion 14b is formed at the position separated from the crush relief 11b based on the above described (expression 1), and therefore, the lubricating oil which is stopped does not move to the crush relief 11b via a gap between the inner circumferential surface of the upper side bearing member 11 and the main shaft 3A. Next, when the lubricating oil which is stopped in the above described depth gradually decreasing portion 14b flows into the internal passage 3C, the lubricating oil is thereafter supplied to the sliding portion of the crankpin 3B and the connecting rod bearing 6 via the internal passage 3C, and most of the lubricating oil is discharged to outside the connecting rod 4 when the opening at the above described crankpin 3B side in the internal passage 3C communicates with the lubricating oil discharge passage 123 which is formed in the above described connecting rod bearing 6.

Meanwhile, the foreign substance in the lubricating oil also remains in the partial groove 14 by the depth gradually decreasing portion 14b, and when the opening of the internal passage 3C which is formed in the main shaft 3A is located at the depth gradually decreasing portion 14b thereafter, the foreign substance flows into the internal passage 3C together with the lubricating oil.

Thereafter, when the opening at the above described crankpin 3B side in the internal passage 3C communicates with the lubricating oil discharge passage 123 formed in the above described connecting rod bearing 6, the foreign substance is discharged outside the connecting rod 4 via the lubricating oil discharge passage 123 together with the lubricating oil, and damage to the crankpin 3B and the connecting rod bearing 6 due to the foreign substance is prevented.

As above, in the engine 1 of the present embodiment, the partial groove 14 is formed in the upper side bearing member 11 of the main shaft 3A, and the depth gradually decreasing portion 14b of the partial groove 14 is formed under the conditions of the above described (expression 1) and (expression 3), whereby most of the lubricating oil which is supplied to the sliding portion of the main shaft 3A and the main bearing 5 can be caused to pass into the internal passage 3C which is formed in the crankshaft 3.

As a result, the amount of the lubricating oil which is discharged from the sliding portion of the main shaft 3A and the main bearing 5 can be suppressed, and because the foreign substance contained in the lubricating oil can be discharged to the internal passage 3C, damage to the main shaft 3A and the main bearing 5 can be prevented.

Further, the foreign substance contained in the lubricating oil which is supplied to the above described internal passage 3C is discharged outside the connecting rod 4 together with the lubricating oil by the lubricating oil discharge passage 123 which is formed in the above described connecting rod bearing 6, and therefore, damage to the crankpin 3B and the connecting rod bearing 6 due to the foreign substance can be also prevented.

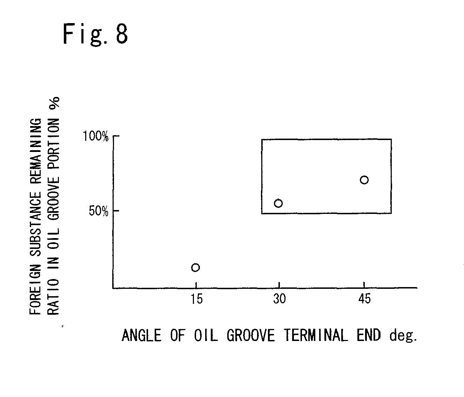

Figure 8 shows a graph showing an experimental result about the engine 1 according to the above described second embodiment.

As is the case with the first embodiment, the experiment was performed by operating the engine 1 with the internal passage 3C of the above described crankshaft 3 being closed, and mixing a predetermined amount of foreign substance into the lubricating oil which was supplied from the lubricating oil passage 2A of the above described cylinder block 2.

Subsequently, it was measured how much foreign substance remains in the partial groove 14 which is formed in the upper side bearing member 11 in the above described main shaft 3A.

Figure 8 is the experimental result about expression 3, and the axis of abscissa represents the angle $\theta$ formed by the depth gradually decreasing portion 14b and the inner circumferential surface of the upper side bearing member 11, whereas the axis of ordinates represents the ratio of the foreign substance mixed via the lubricating oil passage 2A being recovered by the above described partial groove 14. In the experiment of Figure 8, the distance D between the end portion of the partial groove 14 and the crush relief 11b in expression 1 is set as 2 mm.

As is understood from Figure 8, it can be understood that when the formed angle $\theta$ is approximately 25° or larger, the foreign substance favorably remains in the partial groove 14, and it is predictable that if the internal passage 3C of the above described crankshaft 3 communicates therewith in this state, the foreign substance is favorably recovered into the internal passage 3C.

Further, as shown in the graph, the range of expression 3 is further desirably set as the range of $30 \leq \theta \leq 45°$.

In the engine 1 in the first embodiment, the connecting rod bearing 6 according to the above described second embodiment may be used, and in the engine 1 in the second embodiment, the connecting rod bearing 6 according to the above described first embodiment may be used.

Further, as the lubricating oil discharge passages 23 and 123 which are formed in the connecting rod bearings 6 in the first embodiment and the second embodiment, so-called jet holes which are formed to penetrate through the outer surface of the connecting rod 4 from the inner circumferential surface of the connecting rod bearing 6 may be adopted in place of the lubricating oil discharge passages 23 and 123.

Reference Signs List

| | |
|---|---|
| 1 | engine |
| 2 | cylinder block |
| 2A | lubricating oil passage |
| 3 | crankshaft |
| 3A | main shaft |
| 3B | crankpin |
| 3C | internal passage |
| 4 | connecting rod |
| 5 | main bearing |
| 6 | connecting rod bearing |
| 11 | upper side bearing member |
| 11a | radial hole |
| 14 | partial groove |
| 14b | depth gradually decreasing portion |
| 21, 22 | half-split bearing |
| 23 | lubricating oil discharge passage |

**Claims**

**1.** A bearing oil feed device, comprising a crankshaft including a plurality of main shafts and crankpins, a plurality of main bearings which are each configured by a semi-cylindrical upper side bearing member and lower side bearing member, and each pivotally supports the main shaft rotatably at a cylinder block, and a plurality of connecting rod bearings which each pivotally supports the crankpin rotatably at a connecting rod,
in which a radial hole which communicates with a lubricating oil passage formed inside the cylinder block is formed in the upper side bearing member in the main bearing, and a lubricating oil which is supplied to a sliding portion of the main bearing and the main shaft via the radial hole is supplied to a sliding portion of the crankpin and the connecting rod bearing via an internal passage which is formed inside the crankshaft and is opened to the main shaft and the crankpin,
wherein a partial groove which is formed in a circumferential direction of an inner circumferential surface of the upper side bearing member in the main bearing, to which the radial hole is opened, and which communicates with an opening of the internal passage of the main shaft is formed,
a space D between an end portion of the partial groove and each of crush reliefs formed at both ends in a circumferential direction of the upper side bearing member is provided within a range of

$$2 \text{ mm} \leq D \leq \text{main shaft diameter}/3 \dots \text{(expression 1)},$$

a depth gradually decreasing portion which is formed to be arc-shaped in section seen from an axial direction of the upper side bearing member is formed at the end portion of the partial groove, and a radius r of the depth gradually decreasing portion is provided within a range of

$$0 \leq r \leq \text{main bearing inner circumferential surface}$$

$$\text{radius} \times 0.5 \ldots \text{(expression 2)},$$

and
a lubricating oil discharge passage which communicates with the internal passage formed in the crankshaft to discharge the lubricating oil is provided in the connecting rod bearing.

2. A bearing oil feed device, comprising a crankshaft including a plurality of main shafts and crankpins, a plurality of main bearings which each pivotally supports the main shaft rotatably at a cylinder block, and are each configured by a semi-cylindrical upper side bearing member and lower side bearing member, and a plurality of connecting rod bearings which each pivotally supports the crankpin rotatably at a connecting rod,
in which a radial hole which communicates with a lubricating oil passage formed inside the cylinder block is formed in the upper side bearing member in the main bearing, and a lubricating oil which is supplied to a sliding portion of the main bearing and the main shaft via the radial hole is supplied to a sliding portion of the crankpin and the connecting rod bearing via an internal passage which is formed inside the crankshaft and is opened to the main shaft and the crankpin,
wherein a partial groove which is formed in a circumferential direction of an inner circumferential surface of the upper side bearing member in the main bearing, to which the radial hole is opened, and which communicates with an opening of the internal passage of the main shaft is formed,
a space D between an end portion of the partial groove and each of crush reliefs formed at both ends in a circumferential direction of the upper side bearing member is provided within a range of

$$2 \text{ mm} \leq D \leq \text{main shaft diameter}/3 \ldots \text{(expression 1)},$$

a depth gradually decreasing portion with a depth gradually decreasing is formed at the end portion of the partial groove, and an angle $\theta$ formed by the depth gradually decreasing portion and the inner circumferential surface of the upper side bearing member is provided within a range of

$$0 \geq 25° \ldots \text{(expression 3)},$$

and
a lubricating oil discharge passage which communicates with the internal passage formed in the crankshaft to discharge the lubricating oil is provided in the connecting rod bearing.

3. The bearing oil feed device according to claim 2, wherein the angle $\theta$ formed by the depth gradually decreasing portion and the inner circumferential surface of the upper side bearing member is provided within a range of

$$30° \leq \theta \leq 45°.$$

4. The bearing oil feed device according to any one of claim 1 to claim 3,
wherein the oil discharge passage in the connecting rod bearing is configured by a through-hole which penetrates to an outer circumferential surface from an inner circumferential surface of the connecting rod bearing, and a foreign substance discharge groove which is formed in the outer circumferential surface of the connecting rod bearing to communicate with the through-hole and communicate with at least one end surface of the connecting rod bearing.

5. The bearing oil feed device according to any one of claim 1 to claim 3,
wherein the oil discharge passage in the connecting rod bearing includes a foreign substance discharge groove which is formed in the inner circumferential surface of the connecting rod bearing and communicates with at least one end surface of the connecting rod bearing.

# Fig. 1

Fig. 2

Fig. 3

Fig. 4

FOREIGN SUBSTANCE REMAINING RATIO IN OIL GROOVE PORTION %

DISTANCE D BETWEEN CRUSH RELIEF AND OIL GROOVE TERMINAL END (mm)

Fig. 5

FOREIGN SUBSTANCE REMAINING RATIO IN OIL GROOVE PORTION %

DEPTH GRADUALLY DECREASING PORTION r (R⋯INNER CIRCUMFERENTIAL SURFACE RADIUS OF MAIN BEARING)

Fig. 6

Fig. 7

Fig. 8

FOREIGN SUBSTANCE REMAINING RATIO IN OIL GROOVE PORTION %

100%

50%

15    30    45

ANGLE OF OIL GROOVE TERMINAL END deg.

<div align="center">**INTERNATIONAL SEARCH REPORT**</div>

| International application No. |
| --- |
| PCT/JP2010/069669 |

**A. CLASSIFICATION OF SUBJECT MATTER**
*F16C9/02*(2006.01)i, *F16C3/14*(2006.01)i, *F16C9/04*(2006.01)i, *F16C17/02*
(2006.01)i, *F16C33/10*(2006.01)i

According to International Patent Classification (IPC) or to both national classification and IPC

**B. FIELDS SEARCHED**

Minimum documentation searched (classification system followed by classification symbols)
F16C9/02, F16C3/14, F16C9/04, F16C17/02, F16C33/10

Documentation searched other than minimum documentation to the extent that such documents are included in the fields searched
Jitsuyo Shinan Koho          1922-1996   Jitsuyo Shinan Toroku Koho   1996-2010
Kokai Jitsuyo Shinan Koho   1971-2010   Toroku Jitsuyo Shinan Koho   1994-2010

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2008-020028 A  (Toyota Motor Corp.),<br>31 January 2008 (31.01.2008),<br>paragraphs [0012] to [0020]; fig. 1 to 3<br>(Family: none) | 1-5 |
| Y | JP 2005-249024 A  (Daido Metal Co., Ltd.),<br>15 September 2005 (15.09.2005),<br>paragraphs [0011] to [0027]; fig. 1 to 5<br>& US 2005/0196084 A1    & DE 102005009470 A | 1-5 |

☒  Further documents are listed in the continuation of Box C.        ☐  See patent family annex.

| | |
| --- | --- |
| *   Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search<br>    30 November, 2010 (30.11.10) | Date of mailing of the international search report<br>    14 December, 2010 (14.12.10) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
|---|
| PCT/JP2010/069669 |

C (Continuation).   DOCUMENTS CONSIDERED TO BE RELEVANT

| Category* | Citation of document, with indication, where appropriate, of the relevant passages | Relevant to claim No. |
|---|---|---|
| Y | Microfilm of the specification and drawings annexed to the request of Japanese Utility Model Application No. 051972/1988(Laid-open No. 154323/1989) (Mazda Motor Corp.), 24 October 1989 (24.10.1989), page 6, line 16 to page 9, line 13; fig. 2 to 4 (Family: none) | 1-5 |
| A | JP 2009-041724 A  (Toyota Motor Corp.), 26 February 2009 (26.02.2009), paragraphs [0029] to [0067]; fig. 1 to 8 (Family: none) | 1-5 |
| A | JP 2003-120648 A  (Ford Global Technologies Inc.), 23 April 2003 (23.04.2003), paragraphs [0013] to [0017]; fig. 1, 2 & US 2003/0072506 A1    & EP 1302679 A1 | 1-5 |
| A | JP 60-231011 A  (Mazda Motor Corp.), 16 November 1985 (16.11.1985), page 2, upper right column, line 1 to page 3, left column, line 20; fig. 1 to 5 (Family: none) | 1-5 |
| A | Microfilm of the specification and drawings annexed to the request of Japanese Utility Model Application No. 167804/1988(Laid-open No. 088017/1990) (Nissan Diesel Motor Co., Ltd.), 12 July 1990 (12.07.1990), page 3, line 15 to page 6, line 20; fig. 1 to 5 (Family: none) | 1-5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4219521 A
- JP 5215125 A
- JP 7027127 A
- JP 2005076755 A